# EUROPEAN PATENT APPLICATION

(11) **EP 3 076 201 A1**
(43) Date of publication of application: **05.10.2016**
(21) Application number: 15305465.5
(22) Date of filing: 31.03.2015
(51) Int. Cl.: G01S 13/75, H04B 10/112, H04B 10/80, H04W 88/08

(54) **OPTICAL COMMUNICATION AND ENERGY TRANSMISSION FROM A BASE STATION CONTROLLER TO BATTERY-LESS REMOTE RADIO HEAD (RRH)**

(71) Applicant: ALCATEL LUCENT, 92100 Boulogne-Billancourt (FR)
(72) Inventor: Kucera, Stepan, DUBLIN, 15 (IE); Bulja, Senad, Dublin, 15 (IE)
(74) Representative: Mills, Julia

(57) **Abstract**

A network node, network controller node and methods for supporting communication with user equipment within a wireless telecommunication network are discussed. The network node comprises: an antenna for receiving and transmitting wireless telecommunication communication signals to a user equipment, said wireless telecommunication signals being within a first frequency band. A receiver for receiving an electromagnetic signal transmitted wirelessly from a network controller node within said wireless telecommunication network, said electromagnetic signal being within a second frequency band, said second frequency band being a different frequency band to said first frequency band, said receiver comprising a retro-reflector for reflecting said electromagnetic signal back towards said network controller node. The network node further comprising a modulator operable to modulate at least one property of said electromagnetic signal in dependence upon said signal received from said user equipment such that information received from user equipment is conveyed via modulations in said reflected electromagnetic signal to said network controller node.

## Description

### FIELD OF THE INVENTION

The field of the invention relates to wireless communication between network nodes communicating with user equipment within a wireless communication network.

### BACKGROUND

In a cellular wireless telecommunications network, radio coverage for supporting user equipment communication is provided by network nodes in areas known as cells. A base station or network node is located in each cell to provide the radio coverage area. Traditional base stations provide coverage in relatively large geographical areas and these are often referred to as macro cells. It is possible to provide smaller sized cells, and these are often located within a larger macro cell providing an increase in capacity in certain areas. Such smaller sized cells are sometimes referred to as micro cells, pico cells or femto cells. Such small cells are typically established by providing a small cell base station that provides radio coverage having a relatively limited range, typically within the radio coverage area of a macro cell. The transmission power of the small cell base station is relatively low and, hence, each small cell provides a smaller coverage area compared to that of a macro cell and covers, for example, an office or a home. A group of such small cell base stations may together provide a wireless small cell network.

Such small cells have generally been provided where the communication coverage provided by the macro cell is poor, or where a user wishes to use an alternative communications link provided locally by the small cell base station, to communicate with the core network. Such a situation might arise where, for example, a user has a pre-existing communications link and the user wishes to utilise that link in preference to that provided by the macro cell network provider to communicate with the core network. However, increasingly, small cells are being deployed in areas of high traffic demand (often referred to as hot spots), where that demand risks overloading the macro cell. Users can then be handed over to the small cell in order to reduce the traffic load on the macro cell.

One major challenge for operator deployment of small cells is the cost of the operation and deployment of such cells. The main issue here is the deployment of a backhaul link to communicate with other network nodes and the provision of power to the nodes, these requirements place considerable restrictions on potential deployment sites and increase costs.

Embodiments seek to address these issues.

### SUMMARY

A first aspect of the present invention provides a network node for supporting communication with user equipment of a wireless telecommunication network, said network node comprising: an antenna for receiving and transmitting wireless telecommunication communication signals to a user equipment, said wireless telecommunication signals being within a first frequency band; a receiver for receiving an electromagnetic signal transmitted wirelessly from a network controller node within said wireless telecommunication network, said electromagnetic signal being within a second frequency band, said second frequency band being a different frequency band to said first frequency band, said receiver comprising a retro-reflector for reflecting said electromagnetic signal back towards said network controller node; and a modulator operable to modulate at least one property of said electromagnetic signal in dependence upon said signal received from said user equipment such that information received from user equipment is conveyed via modulations in said reflected electromagnetic signal to said network controller node.

The inventors of the present invention recognised that transmissions from the node of a small cell towards another network controller node require a significant amount of power. They also recognised that the power requirements of a small cell might be considerably reduced were it able to simply modulate a signal that is received wirelessly from the other network node and reflected back. This would enable information to be transmitted without the requirement for a wired link and enable the network node to transmit information in a low power manner. A problem with using a reflected signal to transmit information is that the signal needs to be accurately directed to hit both the target and return to the source. If the signal is transmitted as a narrow beam which would be advantageous in reducing power requirements and potential interference with other signals then the requirements for accurate directing of the beam are high and with windy conditions and vibrations it may be difficult. The use of a retro-reflector on the network node allows the beam to be directed back towards the source without the need for complex beam steering. This is a passive solution which allows the active beam steering to be performed at the other network node, termed the network controller node and this again reduces the power requirement at the network node with the retro-reflector. Thus any steering of the beam is performed at the network controller node allowing the remote network node to transmit data in an almost passive manner by simply modulating and reflecting the received beam. It should be noted that the network controller node may be another network node such as a base station of a macro cell that has its own backhaul link and power supply or it may be a separate small cell controller operable to communicate wirelessly with one or more small cell network nodes.

The frequency bands used to transmit between the network node and the network controller node is different to that used to transmit between the network node and the user equipment which means that these signals do not interfere with each other.

In some embodiments, the first frequency band is lower than the second frequency band meaning that the energy of the signal received from the network controller node is higher than the energy of the signal received from the user equipment. The higher frequency of the signal makes the inclusion of the information in the signal straightforward and the high power of the signal makes it a potential source of power for the network node.

In some embodiments, said first frequency band is a radio frequency band and said second frequency band is an optical frequency band.

Using an optical frequency band for transmission between network nodes can be advantageous as the transmission of narrow beam coherent optical signals using lasers for example, is technically straightforward. Furthermore, the frequency spectrum within which lasers operate is free and produces no inference with legacy wireless communications. It is also of a high frequency and thus, power can be harvested from such a beam. In effect, use is made of optical technology which is a mature and cost efficient technology that uses carrier frequencies in the hundreds of terahertz.

In some embodiments, said modulator comprises light modulating material mounted on at least a portion of a reflective surface of said retro-reflector, an optical property of an electromagnetic signal interacting with said liquid modulating material varying with an electrical signal applied to said light modulating material.

Although the modulator may be made in a number of ways provided that the property of the electromagnetic signal can be modulated, in some embodiments it comprises a light modulating material which is mounted on at least a portion of a reflective surface of the retro reflector and modulates an optical property of an electromagnetic signal that interacts with it. When the electrical signal applied to the light modulating material is derived from a signal received from the user equipment, then the information in that user equipment signal will be conveyed within the modulations in the electromagnetic signal back towards the network controller node.

In some embodiments, said light modulating material comprises liquid crystals and said optical property comprises an optical path length such that a phase of said electromagnetic signal is modulated by said applied electrical signal.

Applying an electric signal to liquid crystals, for example applying a voltage, will change the orientation of the crystals and can affect an optical path length of electromagnetic signals passing through them. This in turn will affect the phase of the electromagnetic signal and in this way, a phase modulated signal is transmitted back to the network controller node.

In some embodiments, said network node further comprises a sampler operable to sample said signal received from said user equipment and to convert said user equipment signal to a binary electrical signal, said modulator modulating said optical property in dependence upon said binary electrical signal.

Although the signal from the user equipment may be processed in a number of ways before being used to control the modulation of the electromagnetic signal, in some embodiments it may be sampled and converted to a binary electrical signal, the modulator modulating the optical property in dependence upon this binary signal. In this regard, some modulation techniques may be binary in nature and as such, a binary control signal is appropriate for the control. For example, where the modulator uses liquid crystals then they can be aligned in one of two directions, the optical path through the liquid crystal changing with their alignment. In this case, a binary electrical signal that is applied to the liquid crystals is a suitable control signal for controlling their state and thereby controlling the modulation of the electromagnetic signal.

In some embodiments, said sampler is operable to convert said user equipment signal into one of a pulse width modulated signal and a pulse frequency modulated signal.

A binary electrical signal may take a number of forms and in some cases it might be a pulse width modulated signal or in others a pulse frequency modulated signal. These signals are suitable ways of transmitting the information from the user equipment signal in a binary manner. Thus, taking again the example of the liquid crystals as a modulator, the optical path length is changed periodically in response to these binary electrical signals and provided the liquid crystals can respond at the frequency of the control signal, the information is conveyed via the modulated electromagnetic signal.

In some embodiments, said retro-reflector comprises a corner cube comprising a plurality of reflective surfaces operable to receive and reflect an electromagnetic signal back towards a source of said electromagnetic signal.

The retro reflector may take a number of forms, but in some embodiments it comprises a corner cube. Where the modulator comprises liquid crystals mounted or coating at least a portion of the surface of the retro reflector, then where it is a corner cube, these liquid crystals may coat one or more of the surfaces.

In some embodiments, said receiver is further operable to receive downlink data for said user equipment within an electromagnetic signal in said second frequency band, said network node further comprising: a frequency converter for converting said received electromagnetic signal from said second to said first frequency band; and a transmitter for transmitting said converted electromagnetic signal towards said user equipment.

In addition to transmitting uplink data to the network controller node, the network node may receive downlink data from this node. This again may transmitted as an electromagnetic signal within the second frequency band and this maybe converted by the network node to the first frequency band prior to transmitting to the user equipment. Where the second frequency band is at a higher frequency than the first frequency band, then this is a simple conversion to do and requires little or no power.

In some embodiments, the received electromagnetic signal that contains the downlink data is the same signal that is reflected and modulated to contain the uplink signal. In this regard, where different forms of modulation are used to transmit this information, for example, the downlink data may use amplitude modulation where the uplink signal may use phase modulation, then it is a simple matter to use the same carrier signal as no interference between the different modulations will occur. Where however the same modulation is used to transmit the information, then the same carrier signal can still be used as the network controller node is aware of the information within the downlink data and can thus distinguish any uplink data in the modulated electromagnetic signal it receives from the downlink data that it sent.

In other embodiments separate electromagnetic signals may be transmitted, one being reflected and modulated to contain the uplink data and the other containing the downlink data.

In some embodiments, said network node comprises an optical electrical converter operable to convert at least a portion of said received electromagnetic signal into an electrical power for powering said network node.

As the network node has been designed not to perform processing of the user equipment signal or to actively transmit a signal to a further network node, the network controller node, it can operate at a very low power, in some embodiments, rather than needing a separate power source it can be powered using power harvested from an electromagnetic signal received from the network controller node. In this regard, where the network controller node transmits electromagnetic signals to it in a higher frequency band, then there is significant energy within these signals and harvesting some of this energy to power the network node is an efficient way of powering this node without the requirement for a separate power supply.

A second aspect of the present invention provides a method performed at a network node for supporting communication with user equipment within a wireless telecommunication network, said method comprising: receiving and transmitting wireless telecommunication communication signals to a user equipment, said wireless telecommunication signals being within a first frequency band; receiving an electromagnetic signal transmitted wirelessly from a network controller node within said wireless telecommunication network, said electromagnetic signal being within a second frequency band, said second frequency band being a different frequency band to said first frequency band; reflecting using a retro-reflector said electromagnetic signal back towards said network controller node; and modulating at least one property of said electromagnetic signal in dependence upon said signal received from said user equipment such that information received from user equipment is conveyed via modulations in said reflected electromagnetic signal to said network controller node.

A third aspect of the present invention provides a network controller node for supporting communication with user equipment of a wireless telecommunication network, said network controller node comprising: at least one transmitter for transmitting electromagnetic signals wirelessly towards a network node of said wireless telecommunication network, at least one of aid electromagnetic signals comprising downlink data for user equipment communicating with said network node; a receiver for receiving an electromagnetic signal, said electromagnetic signal comprising an electromagnetic signal transmitted by said transmitter and modulated by and reflected from said network node; a demodulator for demodulating said received electromagnetic signal to extract uplink data from user equipment communicating with said network node; wherein said network controller node is operable to transmit electromagnetic signals in a second frequency band towards said network node, said user equipment communicating with said network nodes in a first frequency band, said second frequency band being a different frequency band to said first frequency band.

A network controller node may be provided for communicating with a remote network node and for transmitting a signal in a frequency band that is different to the frequency band that is used to communicate with user equipment, such that there is no interference between the signals. The network controller node receives and demodulates this electromagnetic signal when it has been reflected and modulated by the remote network node. In this way, it can determine information transmitted from this network node without the requirement for the network node to have its own electromagnetic signal generator.

In some embodiments, said network controller node supports wireless communication for user equipment within a cell comprising said network node, said network node supporting wireless communication within a small cell located within said cell of said network controller node, said network controller node comprising an antenna for transmitting and receiving signals from user equipment in said first frequency band.

Although the network controller node may simply be a small cell controller operable to control one or more network nodes of small cells, in some embodiments it may be a network node itself of a larger cell within which the small cell may be situated. In some embodiments, said network controller node comprises processing logic for processing said uplink signals.

In order for the remote network node not to have high power or hardware requirements, the processing of the signals that it receives from user equipment may be performed at the network controller node. Locating the hardware and power requirements of such tasks centrally in a network controller node is efficient and in some embodiments the network controller node may communicate with and perform processing for a plurality of network nodes. In this regard, the processing will include demodulating the uplink signal and also generating and transmitting appropriate signals on the downlink channel. The network controller node may also control the idle mode processing for the network node which not only reduces the power consumption of that node but also in some cases where the network controller node receives signals from several network nodes allows the control to be improved taking into account the operation of several cells.

In some embodiments said network controller node comprises at least one transmitter operable to transmit electromagnetic signals wirelessly towards a plurality of network nodes; a receiver for receiving a plurality of electromagnetic signals, said electromagnetic signals comprising electromagnetic signals transmitted by said at least one transmitter and modulated by and reflected from said plurality of network nodes.

The network controller node may communicate with a plurality of network nodes and in such a case processing circuitry on the network controller node can provide processing for each of them.

A fourth aspect of the present invention provides a method performed at a network controller node for supporting communication with user equipment of a wireless telecommunication network, said method comprising: transmitting electromagnetic signals wirelessly towards a network node of said wireless telecommunication network at least one of said signals comprising downlink data for said user equipment; receiving an electromagnetic signal, said electromagnetic signal comprising an electromagnetic signal transmitted by said transmitter and modulated by and reflected from said network node; demodulating said received electromagnetic signal to extract uplink data from user equipment communicating with said network node; wherein said electromagnetic signals are transmitted in a second frequency band towards said network node, said user equipment communicating with said network nodes in a first frequency band, said second frequency band being a different frequency band to said first frequency band.

A fifth aspect of the present invention provides a wireless communication network comprising a network node according to a first aspect to the present invention and a network controller node according to a third aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows a predicted increase in wireless traffic in North America from 2007-2020;
Figure 2 schematically shows small cell architecture with wireless power and optical backhaul;
Figure 3 shows a proposed optical to radio frequency converter comprising a modulated retro-reflector according to an embodiment;
Figure 4 shows a schematic illustration of the downlink channel according to an embodiment;
Figure 5 shows the estimated power that is available for broadcast as a function of SCC-ORC distance (communication range);
Figure 6 shows a schematic illustration of the uplink channel according to an embodiment;
Figure 7 shows a corner cube retro-reflector with indicated reflective properties;
Figure 8 shows the uplink communication range by indicating the total uplink signal power assuming (1) 5% and 30% conversion efficiency and (2) the SCC light source partially obstructing or not obstructing the SCC lens for focussing of the energy of the retro reflective light;
Figure 9 shows an example realisation of uplink channel using a phase modulating reflector according to an embodiment;
Figure 10 shows the phase difference between states 1 and 2 achieved by two types of LC material (CB5 and 5PCH) assuming the LC coating of one or two walls of a corner cube; and
Figure 11 schematically shows a network node and network controller node according to an embodiment.

### DESCRIPTION OF THE EMBODIMENTS

Before discussing the embodiments in any more detail, first an overview will be provided.

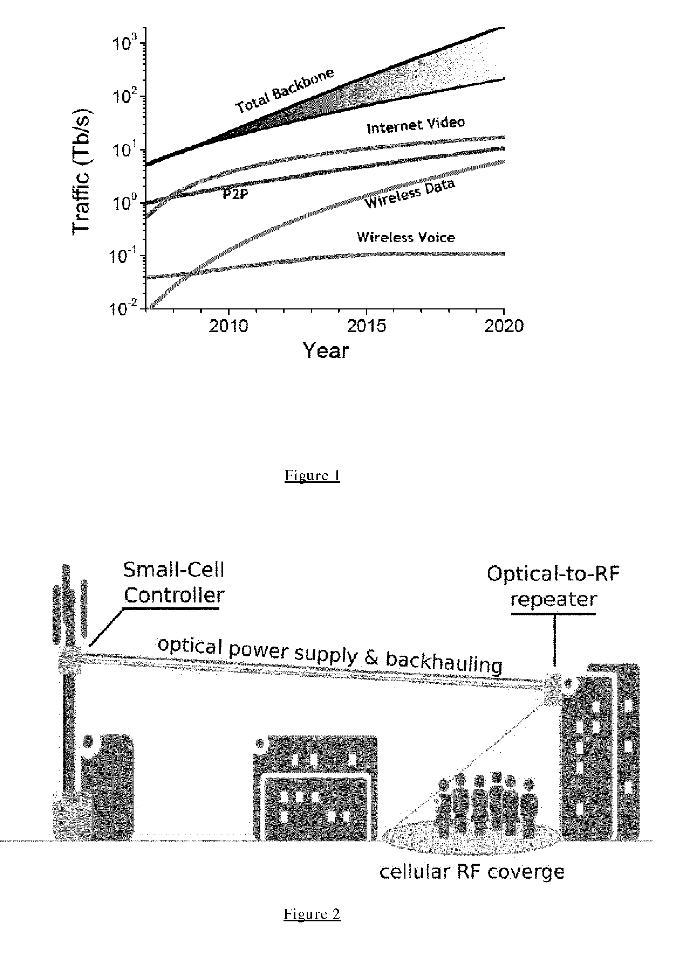

Increasing demand for wireless multimedia services is driving a strong growth in wireless data traffic. Figure 1 shows a predicted exponential increase in wireless traffic in North America from 2007 to 2020. Operators can address the high data demand by allocating more carriers, but technically usable wireless spectrum is limited and expensive. Therefore, cellular operators have a high interest in utilizing the spectrum as efficiently as possible. In this regard, deploying small cells is the easiest way to improve the spectrum utilization by spatial re-use (so-called co-channel deployments). The network capacity can be increased linearly with the number of deployed small cells within the same spectrum.

As a result, femtocells have become widely deployed in the past years to improve cellular indoor capacity (and coverage). In addition operators are currently interested in outdoor small cell deployments, such as ALU's lightRadio small cells.

One major challenge for operator deployed small cells is the operation and deployment cost of such cells. Here the main issue is the provision of both power and backhaul, which make today's small cell deployment expensive.

Considering the requirements of power and backhaul, placement options are currently very restricted. In addition, current solutions are very expensive as site rental on its own typically represents around 60% of costs associated with small cell deployment and operation.

Therefore, any solution that can widen the potential of small cell deployment by removing or reducing those restricted requirements and associated costs would be most welcome.

Embodiments seek to provide a novel small cell architecture which in some cases allows an energy autonomous deployment of small cells with wireless power and wireless backhaul and a small cost/ size. This can significantly reduce the deployment costs and enable cost effective large scale small cell deployments.

Conventionally high-capacity backhaul is implemented by means of fibre optics which is very expensive to lay or rent.

Idle mode procedures are meant to improve the energy efficiency of a network node, but their true benefit comes only if packet-level sleep modes (sub-ms/ms interval) are possible while current wake-up cycles last over 50-100 ms. Furthermore, the energy consumption for processing (e.g. turbo decoding, etc.) is very high with processing becoming ever more complex with the introduction of new communication standards, and transmission techniques such as MIMO, etc.

The proposed architecture addresses this issue by moving the signal processing out of the small cell to a point where power is available. This allows a significant reduction of energy consumption of the small cell, which eases energy autonomous deployment in a small size and independently of the expensive availability of power supply and backhaul.

In this regard, the closest state-of-the-art technology lies with the Bell Labs' Blue (Future) Cube project that proposes to implement small cell base stations as mm-wave solar-powered converters. The drawbacks of this technology consist in slow charging, requirement of extremely dense deployment, as well as cost and size issues.

Embodiments of the invention propose to integrate optical links into legacy infrastructure of a cellular network in order to take advantage of
(i) mature and cost-efficient optical technology,
(ii) extreme 100 THz carrier frequencies,
(iii) free optical spectrum, and
(iv) zero interference with legacy systems.

In brief, embodiments proposes a legacy-compatible small-cell base station in the form of a cord-less optical-to-radio-frequency converter that is independent of at least one of expensive/limited power or backhaul infrastructure. In this regard in some embodiments it may be convenient to provide the network node with some power supply such as a solar cell or battery rather than relying on energy harvesting from a received electromagnetic signal.

In the proposed setting, as schematically depicted in Fig. 2, a small-cell controller (SCC) - for example, the hosting macro cell - provides, by using a free-space optical (laser) link, both
- wireless remote power supply (local energy harvesting optional), and
- high-capacity wireless backhaul
to an optical-to-radio-frequency converter (ORC) that serves surrounding mobile users as a conventional small cell. The optical signal is modulated with legacy RF waveform such as 3G UMTS CDMA or 4G LTE OFDM.

In this embodiment, all the energy-demanding signal processing is done in the SCC that has access to both power and backhaul. The ORC carries only the optical-to-radio-frequency conversions whose power demands can be met by remote power supply at the ORC. Subsequently offered data show possible range of 50-150 m distances between the SCC and ORC depending on the scenario.

The remote power provided over the optical link avoids the need for battery backup at the small cell required for today's solar powered solutions, through energy harvesting from the optical signal. Similarly to signal processing, the idle mode control can be shifted to the SCC where decisions can be made more optimally taking multiple cells into account.

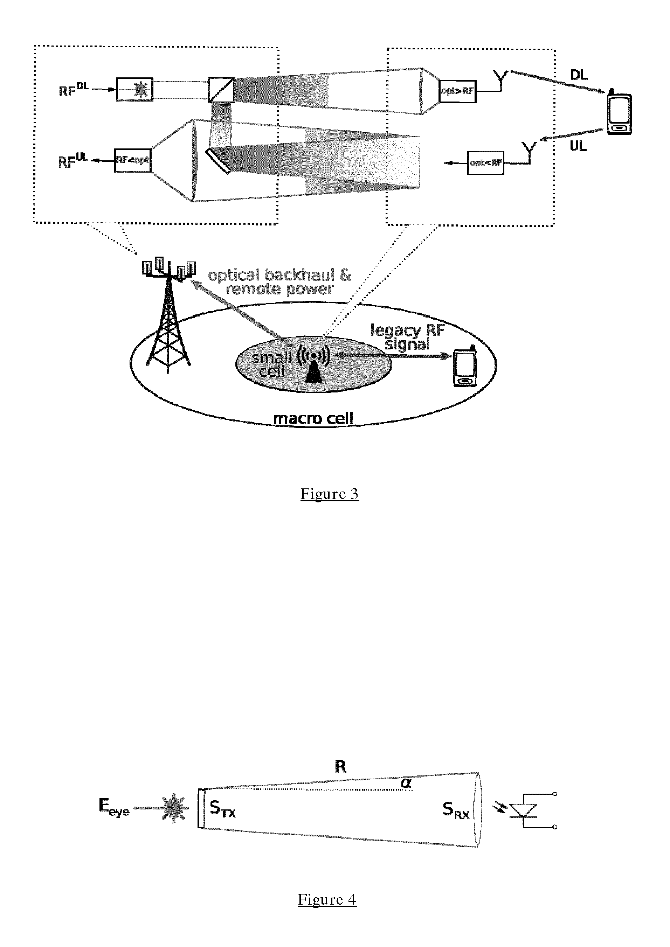

In particular, as shown by Fig. 3, the invention proposes an RF-to-optical converter that is remotely powered and backhauled by the SCC by using optical (laser) light. On the downlink (DL), the RF-modulated optical signal is converted to an RF signal and sent directly to the antenna. A retro-reflector is used to reflect in perfect or near perfect spatial alignment a fraction of the incident optical energy back to the SCC. This reflected light is modulated with the uplink (UL) RF signal send by the network user to the small cell.

The small-cell controller (SCC) and the optical-to-RF converter (ORC) communicate in the simplest setting by using two separate optical channels for respective downlink and uplink communications (see Fig. 3). As discussed subsequently, these channels can be merged if desirable, or alternatively, a third independent channel can be used for dedicated delivery of optical energy from the SCC to the ORC.

### Downlink channel

On the SCC side, a simple eye-safe laser of class 1M emits an optical signal having a carrier wavelength of 1550 nm (near-infrared frequency), maximum intensity of 100mW/cm2 at aperture and typical spatial divergence of 0.5 to 1 mrad. Higher eye-safe outputs are possible. The optical carrier frequency is modulated in an analog manner with a legacy RF waveform such as 3G UMTS CDMA or 4G LTE OFDM. Beams can be expanded to desired aperture intensities (i.e., output power) by standard laser beam expanders.

On the ORC side, a receiving lens focuses the incident light onto a detecting device. This device can be for example
- a zero-bias high-speed edge-coupled unitraveling-carrier InGaAs photodiode,
- high-power flip-chip mounted photodiode array,
- proprietary silicon-photonics device as developed by Bell Labs and their collaborators (Tyndall Institute Ireland).

The speed of these devices is typically of the order of units to tens of GHz, so the detected signal can be directly sent to the antenna for RF broadcast to the surrounding mobile network users. Frequency up/ down-conversions and amplification are typically not required, although they can be readily incorporated into the system design.

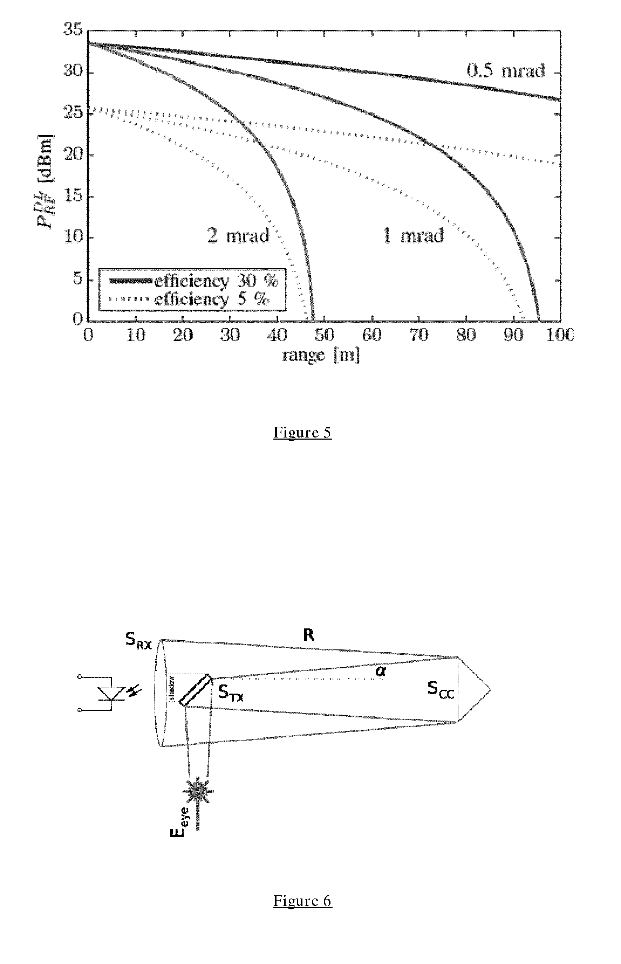

Fig. 5 show the estimated power that is available for broadcast as function of SCC-ORC distance, i.e. communication range.

On the uplink, the ORC relays the RF signals of the mobile users via optical backhaul link to the SCC in a manner similar to the functionality of the downlink channel.

However, three novel issues must be resolved in comparison to the downlink case:
- The user signals must be amplified by using the retrieved SCC optical energy. To this end, the downlink channel energy can be split between the antenna feed and the energy-harvesting device (e.g. based on a simple capacitor). Alternatively, a third channel dedicated to downlink power supply can be used.
- The ORC must be able to modulate the user signals onto the optical carrier. In this context, we note that the surplus of retrieved downlink optical energy is typically too low for powering a laser at the ORC for uplink communications.

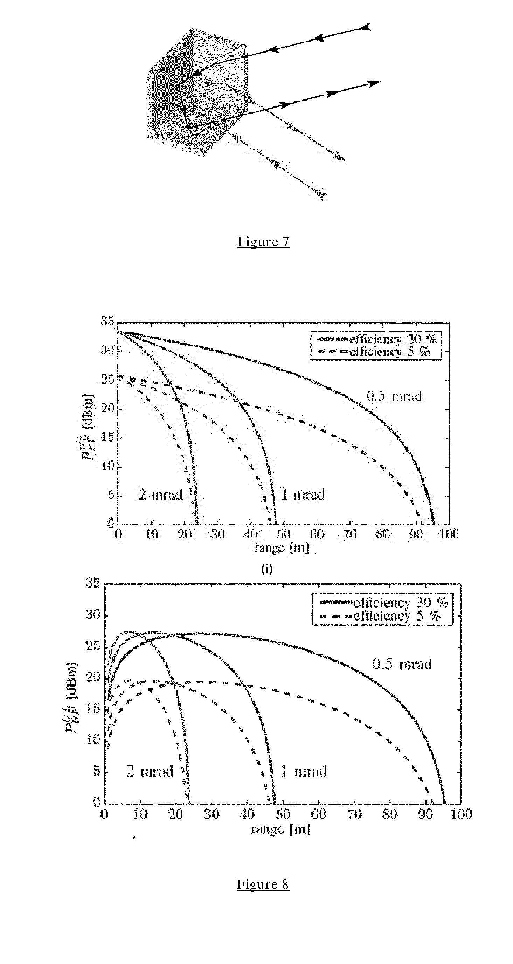

The ORC emission of optical energy must be aligned with the aperture of the receiving SCC. To address all the above issues, it is proposed to
- reflect the incident light by a retro-reflector such as a corner cube as depicted in Fig. 7. Using total reflections from three mutually perpendicular surfaces, a corner cube is able to reflect incident light exactly in the same spatial angle, that is to say, back to the light source.
- modulate the phase of the reflected downlink light by using a special coating of the corner-cube walls. In this invention example, liquid crystal (LC) materials capable of ns-fast switching of their relative permitivity are used as the coating medium. LC technology is well known and cost-efficient in production. Note that known modulated retro-reflectors are unusable in our setting as their quantum-well based modulators required large bias voltage of hundreds of volts, and consumes substantial powers as well.
- use standard interferometry at the SCC to detect the phase-modulated signal taking the advantage of the coherency of laser light.

By using the retro-reflector, the ORC becomes essentially a passive source of perfectly or near perfectly aligned optical carrier, modulated by uplink RF signals. Similarly to Fig. 5, Fig. 8 shows the uplink communication range by indicating the total uplink signal power assuming (i) 5% and 30% conversion efficiency, and (ii) the SCC light source partially obstructing or not obstructing the SCC lens for focusing of the energy of the retro-reflected light.

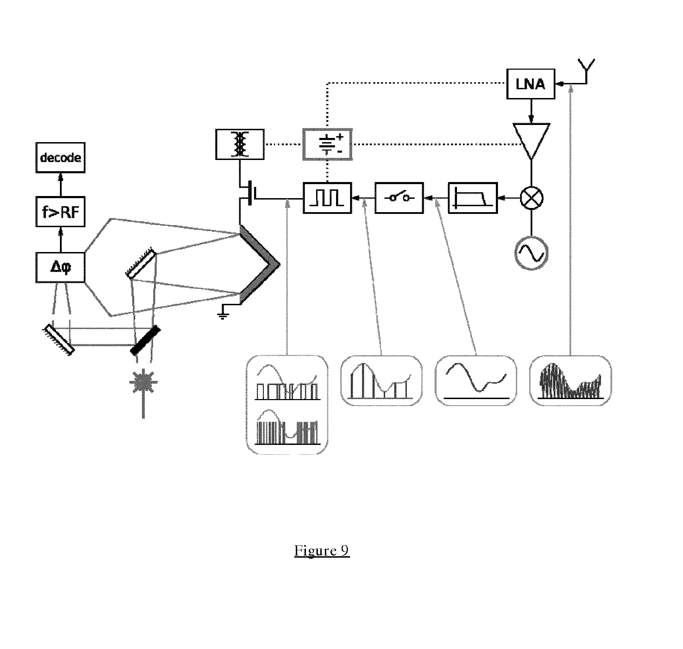

In the following, a particular example of the uplink channel using a phase-modulating retro-reflector depicted in Fig. 9 is described. It is important to realize that other embodiments of uplink channel are possible. The main idea is to convert the analog signal from the mobile user to a width or frequency modulated pulse train that is then used to drive binary LC-based phase modulator of the reflected SCC light. The whole process is reversed at the SCC to reconstruct the original user signal.

The signal from a mobile user is fed from the antenna to a low-noise amplifier (LNA), if necessary, and then to a subsequent power amplifier. These components are powered by the energy harvested from the downlink channel as discussed above (see battery symbol in red, the symbolic color of the laser light). Then, down-conversion of the uplink user signal is carried out to operate with the baseband equivalent. To this end, carrier signal etalon is required. Preferably, the carrier signal is delivered from the SCC as part of the optical information (see oscillator symbol in red).

The subsequent circuitry consists of a sample &hold device (typically based on a simple capacitor). The analog samples of the baseband uplink signal are then used as an input of a pulse train generator to determine the frequency or pulse width of the pulses.

The binary pulse input is then used to drive the state of the LC layer that coats the retro-reflector. In particular, if no pulse is present, the liquid crystals are in the "normal" or ground state - State 1. If a pulse creates a voltage gradient across the LC layer, the LC orientation changes and the excited state - State 2 is assumed.

The transition from State 1 to/from 2 is characterized by a change of optical length of the path along which the incident light travels through the LC layer, resulting in a phase shift of the State-2 optical signal as compared to the original State-1 signal. By using standard interferometry, this phase shift can be detected at the SCC. The user uplink signal can be then reconstructed by reversion the ORC encoding process.

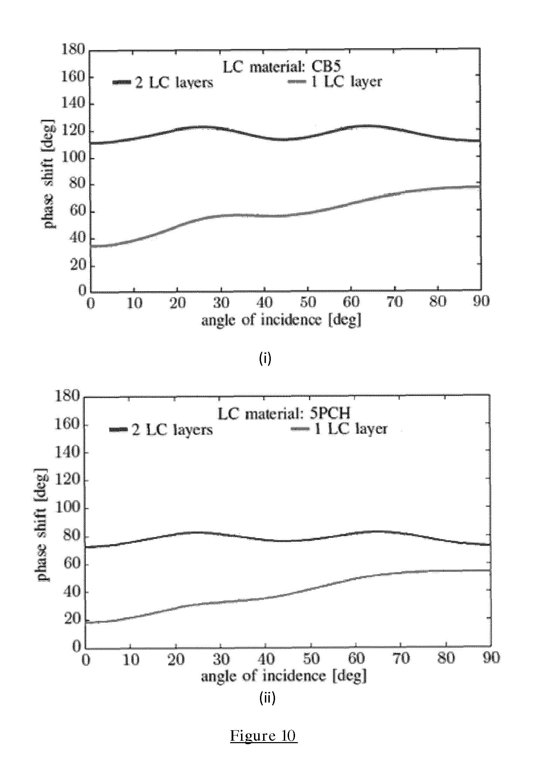

Fig. 10 shows the phase difference between States 1 and 2 achieved by two types of LC material (CB5 and 5PCH) assuming the LC coating of 1 or 2 walls of the corner cube. A large phase shift of tens of degrees is observed, independently of the angle or incidence.

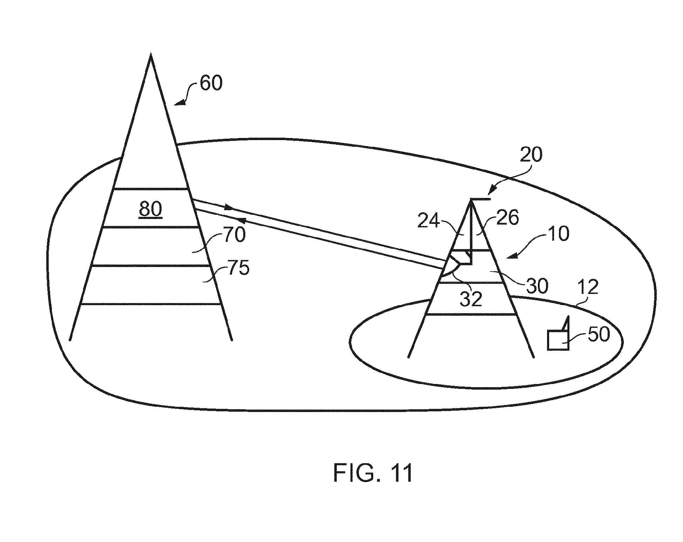

Figure 11 schematically shows a network node 10 in this case a small cell base station and a network controller node 60 in this case a macro cell base station according to an embodiment.

Network node 10 provides radio coverage within a small cell 12 to user equipment 50. The network node 10 has an antenna 20 for transmtiting signals using a radio frequncy carrier signal to user equipment 50 and for receiving signals from the user equipment 50. It also comprises a receiver 30 with a retro-reflector 32 for receiving an infra-red laser signal from network controller node 60. This signal contains a downlink signal for the user equipment transmitted as amplitude modulations of this signal. A frequency down convertor 26 converts this received signal to a radio frequency signal for transmission by the antenna 20 to user equipment 50.

Retro-reflector 32 reflects the laser beam received from the network controller node 60 back towards it. Retro-reflector has light modulating means mounted on one of its surfaces. Signals received from uer equipment 50 at antenna 20 are sampled by sampler 24 and converted to binary signals which are input to the light modulating means and control it to modulate the laser signal received from the network controller node 60 and generate a modulated signal which is transmitted back towards the network controller node 60.

Network controller node 60 receives the signal demodulates it using demodulating logic 70 and performs whatever processing is required using processing logic 75. Network controller node 60 further comprises modulating circuitry 80 for modulating the laser beam transmitted to the network node 10 with the downlink data for user equipment communicating with the network node 10 of the small cell.

In this way the network node can transmit backhaul and forehaul information by modulating a signal it receives from the network controller node which removes the need for a wired backhaul link and reduces its power requirements.

In summary, embodiments simplify the deployment of outdoor small cells by removing or at least reducing the need for local power and backhaul at the deployment location. Other benefits include the following observations:

Simple robust and cost-efficient design having zero interference with legacy systems.

Cost-efficient/ simple deployment - Small cells can be simply attached to buildings/lamp posts without the need of local power and backhaul which dramatically reduces deployment and operational costs.

Hardware virtualization - The centralized SCC processing allows advanced signal processing (e.g., network MIMO or inter-cell interference coordination) and enables software-defined radio and infrastructure sharing. Since the small cell simply translates light to RF, upgrades to new standards can be performed simply by upgrading the SCC, and the deployed cells don't need to be changed.

Advanced idle mode control - The SCC can make joint decisions for multiple cells. Where power is provided via optical link, switching it off reduces the power consumption of the small cell to zero. In such a case the overall power consumption of the small cell is thus reduced to the minimum possible from an architectural standpoint and is mainly limited by the uplink efficiency of the power amplifier. Efficient idle mode control of which current RF approaches (suffering from low component efficiency anyway) are incapable of compensate for the inefficiency of optical-to-RF conversion (30-40% for 1550 nm current technology).

Some embodiments have no battery dependency - The removal of battery back up makes the cell smaller lighter and more reliable with no costly maintenance required.

Pooling gains - Since multiple small cells can be served by one SCC, processing pooling gains can be achieved, especially when not all cells are fully loaded at all times (reduces the costs for processing). The fast densification of heterogeneous network make the cells smaller and the variation of traffic more significant, so the pooling gains will become more and more significant - especially if deployment costs are further reduced as envisaged in connection to the present .

Compared to the existing Blue (Future) Cube technology, the proposed design is characterized by
- mature and cost-efficient optical technology,
- extreme 100 THz carrier frequencies,
- free optical spectrum,
- zero interference with legacy systems,
- very fast idle mode control,
- reduced power usage.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network node for supporting communication with user equipment within a wireless telecommunication network, said network node comprising:
an antenna for receiving and transmitting wireless telecommunication communication signals to a user equipment, said wireless telecommunication signals being within a first frequency band;
a receiver for receiving an electromagnetic signal transmitted wirelessly from a network controller node within said wireless telecommunication network, said electromagnetic signal being within a second frequency band, said second frequency band being a different frequency band to said first frequency band, said receiver comprising a retro-reflector for reflecting said electromagnetic signal back towards said network controller node; and
a modulator operable to modulate at least one property of said electromagnetic signal in dependence upon said signal received from said user equipment such that information received from user equipment is conveyed via modulations in said reflected electromagnetic signal to said network controller node.

2. A network node according to claim 1, wherein said second frequency band is a higher frequency band than said first frequency band.

3. A network node according to claim 2, wherein said first frequency band is a radio frequency band and said second frequency band is an optical frequency band.

4. A network node according to any preceding claim, wherein said electromagnetic signal is a laser beam.

5. A network node according to any preceding claim, wherein said modulator comprises light modulating material mounted on at least a portion of a reflective surface of said retro-reflector, an optical property of an electromagnetic signal interacting with said liquid modulating material varying with an electrical signal applied to said light modulating material.

6. A network node according to claim 5, wherein said light modulating material comprises liquid crystals and said optical property comprises an optical path length such that a phase of said electromagnetic signal is modulated by said applied electrical signal.

7. A network node according to any preceding claim, said network node further comprising a sampler operable to sample said signal received from said user equipment and to convert said user equipment signal to a binary electrical signal, said modulator modulating said optical property in dependence upon said binary electrical signal.

8. A network node according to claim 7, wherein said sampler is operable to convert said user equipment signal into one of a pulse width modulated signal and a pulse frequency modulated signal.

9. A network node according to any preceding claim, wherein said retro-reflector comprises a corner cube comprising a plurality of reflective surfaces operable to receive and reflect an electromagnetic signal back towards a source of said electromagnetic signal.

10. A network node according to any preceding claim, wherein said receiver is further operable to receive downlink data for said user equipment within an electromagnetic signal in said second frequency band, said network node further comprising:
a frequency converter for converting said received electromagnetic signal from said second to said first frequency band; and
a transmitter for transmitting said converted electromagnetic signal towards said user equipment.

11. A network node according to any preceding claim, said network node comprising an optical electrical convertor operable to convert at least a portion of said received electromagnetic signal into electrical power for powering said network node.

12. A method performed at a network node for supporting communication with user equipment within a wireless telecommunication network, said method comprising:
receiving and transmitting wireless telecommunication communication signals to a user equipment, said wireless telecommunication signals being within a first frequency band;
receiving an electromagnetic signal transmitted wirelessly from a network controller node within said wireless telecommunication network, said electromagnetic signal being within a second frequency band, said second frequency band being a different frequency band to said first frequency band;
reflecting using a retro-reflector said electromagnetic signal back towards said network controller node; and
modulating at least one property of said electromagnetic signal in dependence upon said signal received from said user equipment such that information received from user equipment is conveyed via modulations in said reflected electromagnetic signal to said network controller node.

13. A network controller node for supporting communication with user equipment of a wireless telecommunication network, said network controller node comprising:
at least one transmitter operable to transmit electromagnetic signals wirelessly towards a network node of said wireless telecommunication network, at least one of aid electromagnetic signals comprising downlink data for user equipment communicating with said network node;
a receiver operable to receive an electromagnetic signal, said electromagnetic signal comprising an electromagnetic signal transmitted by said transmitter and modulated by and reflected from said network node;
a demodulator operable to demodulate said received electromagnetic signal to extract uplink data from user equipment communicating with said network node; wherein
said network controller node is operable to transmit said electromagnetic signals in a second frequency band towards said network node, said user equipment communicating with said network node in a first frequency band, said second frequency band being a different frequency band to said first frequency band.

14. A network controller node according to claim 13, said network controller node comprising processing logic for processing said uplink signals.

15. A method performed at a network controller node for supporting communication with user equipment of a wireless telecommunication network, said method comprising:
transmitting electromagnetic signals wirelessly towards a network node of said wireless telecommunication network at least one of said signals comprising downlink data for said user equipment;
receiving an electromagnetic signal, said electromagnetic signal comprising an electromagnetic signal transmitted by said transmitter and modulated by and reflected from said network node;
demodulating said received electromagnetic signal to extract uplink data from user equipment communicating with said network node; wherein
said electromagnetic signals are transmitted in a second frequency band towards said network node, said user equipment communicating with said network nodes in a first frequency band, said second frequency band being a different frequency band to said first frequency band.

## Amended claims

### Amended claims in accordance with Rule 137(2) EPC.

1. A network node (10) for supporting communication with user equipment (50) within a wireless telecommunication network, said network node comprising:
an antenna (20) for receiving and transmitting wireless telecommunication communication signals to a user equipment, said wireless telecommunication signals being within a first frequency band;
a receiver (30) for receiving an electromagnetic signal transmitted wirelessly from a network controller node within said wireless telecommunication network, said electromagnetic signal being within a second frequency band, said second frequency band being a different frequency band to said first frequency band, said receiver (30) comprising a retro-reflector (32) for reflecting said electromagnetic signal back towards said network controller node; and
a modulator operable to modulate at least one property of said electromagnetic signal in dependence upon said signal received from said user equipment (50) such that information received from user equipment is conveyed via modulations in said reflected electromagnetic signal to said network controller node.

2. A network node according to claim 1, wherein said second frequency band is a higher frequency band than said first frequency band.

3. A network node according to claim 2, wherein said first frequency band is a radio frequency band and said second frequency band is an optical frequency band.

4. A network node according to any preceding claim, wherein said electromagnetic signal is a laser beam.

5. A network node according to any preceding claim, wherein said modulator comprises light modulating material mounted on at least a portion of a reflective surface of said retro-reflector (32), an optical property of an electromagnetic signal interacting with said liquid modulating material varying with an electrical signal applied to said light modulating material.

6. A network node according to claim 5, wherein said light modulating material comprises liquid crystals and said optical property comprises an optical path length such that a phase of said electromagnetic signal is modulated by said applied electrical signal.

7. A network node according to any preceding claim, said network node further comprising a sampler (24) operable to sample said signal received from said user equipment and to convert said user equipment signal to a binary electrical signal, said modulator modulating said optical property in dependence upon said binary electrical signal.

8. A network node according to claim 7, wherein said sampler (24) is operable to convert said user equipment signal into one of a pulse width modulated signal and a pulse frequency modulated signal.

9. A network node according to any preceding claim, wherein said retro-reflector comprises a corner cube comprising a plurality of reflective surfaces operable to receive and reflect an electromagnetic signal back towards a source of said electromagnetic signal.

10. A network node according to any preceding claim, wherein said receiver (30) is further operable to receive downlink data for said user equipment (50) within an electromagnetic signal in said second frequency band, said network node further comprising:
a frequency converter (26) for converting said received electromagnetic signal from said second to said first frequency band; and
a transmitter for transmitting said converted electromagnetic signal towards said user equipment.

11. A network node according to any preceding claim, said network node comprising an optical electrical convertor operable to convert at least a portion of said received electromagnetic signal into electrical power for powering said network node.

12. A method performed at a network node for supporting communication with user equipment within a wireless telecommunication network, said method comprising:
receiving and transmitting wireless telecommunication communication signals to a user equipment, said wireless telecommunication signals being within a first frequency band;
receiving an electromagnetic signal transmitted wirelessly from a network controller node within said wireless telecommunication network, said electromagnetic signal being within a second frequency band, said second frequency band being a different frequency band to said first frequency band;
reflecting using a retro-reflector said electromagnetic signal back towards said network controller node; and
modulating at least one property of said electromagnetic signal in dependence upon said signal received from said user equipment such that information received from user equipment is conveyed via modulations in said reflected electromagnetic signal to said network, controller node.

13. A network controller node (60) for supporting communication with user equipment (50) of a wireless telecommunication network, said network controller node (60) comprising:
at least one transmitter operable to transmit electromagnetic signals wirelessly towards a network node of said wireless telecommunication network, at least one of aid electromagnetic signals comprising downlink data for user equipment communicating with said network node;
a receiver operable to receive an electromagnetic signal, said electromagnetic signal comprising an electromagnetic signal transmitted by said transmitter and modulated by and reflected from said network node;
a demodulator (70) operable to demodulate said received electromagnetic signal to extract uplink data from user equipment communicating with said network node; wherein
said network controller node is operable to transmit said electromagnetic signals in a second frequency band towards said network node, said user equipment communicating with said network node in a first frequency band, said second frequency band being a different frequency band to said first frequency band.

14. A network controller node according to claim 13, said network controller node comprising processing logic (75) for processing said uplink signals.

15. A method performed at a network controller node for supporting communication with user equipment of a wireless telecommunication network, said method comprising:
transmitting electromagnetic signals wirelessly towards a network node of said wireless telecommunication network at least one of said signals comprising downlink data for said user equipment;
receiving an electromagnetic signal, said electromagnetic signal comprising an electromagnetic signal transmitted by said transmitter and modulated by and reflected from said network node;
demodulating said received electromagnetic signal to extract uplink data from user equipment communicating with said network node; wherein
said electromagnetic signals are transmitted in a second frequency band towards said network node, said user equipment communicating with said network nodes in a first frequency band, said second frequency band being a different frequency band to said first frequency band.
